# EUROPEAN PATENT SPECIFICATION

(11) **EP 3 441 649 B1**
(45) Date of publication and mention of the grant of the patent: **30.06.2021**
(21) Application number: 17185889.7
(22) Date of filing: 11.08.2017
(51) Int. Cl.: F16K 11/044, F16K 17/26, F24D 19/10

(54) **PROTECTION VALVE**
SCHUTZVENTIL
SOUPAPE DE PROTECTION

(43) Date of publication of application: 13.02.2019
(73) Proprietor: E.ON SE, 45131 Essen (DE); Mussett Aerospace Limited, Loddon, Norfolk NR14 6JD (GB)
(72) Inventor: CHAPMAN, Mark, Drayton, Norwich Norfolk NR151ET (GB); MUSSETT, Gordon, Brooke Norfolk NR151ET (GB)
(74) Representative: Glawe, Delfs, Moll

(56) References cited:
- WO-A1-2007/085255
- DE-A1-102010 024 987
- JP-A- S60 220 275

## Description

The invention relates to an arrangement comprising a protection valve.

In district heating systems, a fluid - often water - is heated in a central heating plant to a temperature of 80°C or more before it is distributed to residential and commercial buildings via a network of insulated pipes. At each building connected to the district heating system, there is a pipe loop connected to this pipe network that allows selective obtaining of heat, i.e. hot fluid, wherein the inlet of said pipe loop is connected to feeding lines of the pipe network and its outlet is connected to return lines of the pipe network. Between the inlet and the outlet, the pipe loop is closed and does not comprise any aperture for e.g. withdrawal or addition of fluid.

Within the pipe loop, there generally is a heat exchanger to transfer the heat from the heated fluid within the district heating system to a building heating system as well as a heat metering device and a flow control device. The fluid - slightly cooled down by the heat exchanger but still hot - is returned to the central heating plant via return lines of the insulated pipe network.

Leaks in a pipe loop within a building are dangerous and may cause injuries due to the hot fluid unpredictably escaping from said pipe with high pressure. It is thus desirable to provide for a safety mechanism that stops inflow of heated fluid into a pipe loop in case of a leak.

In hydraulic systems, hydraulically operated devices (actuators, motors, etc.) are connected to the high and low pressure part of the hydraulic system via a feed and a return line, respectively. A leak in either the feed or the return line of one device connected to the hydraulic system may result in a pressure drop within the whole hydraulic system, thus causing a shutdown of all devices connected to the hydraulic system. It is thus desirable to cut off the device with a leak in its connection lines from at least the high pressure part of the hydraulic system to keep the remaining parts of the system in a working condition.

Safety shutoff valves are known from the state of the art. These valves allow fluid flow in case the fluid pressure on both sides of the valve are identical but block the fluid flow if there is a pressure drop on one side of the valve. Such safety shutoff valves can be effective for detecting leaks in ordinary pipe sections right next to the valve. However, if a leak occurs in a pipe section that is farther away from the safety shutoff valve, especially when there are devices situated in the piping between the leak and the safety shutoff valve that limit the through flow of fluid and thus potentially the pressure drop occurring at the safety shutoff valve due to a leak, known safety shutoff valves do not provide the required reliability for a safety shutoff, especially in the areas of technology described above as examples. Furthermore, known safety shutoff valves can be prone to false alarms, i.e. unwanted blocking of the fluid flow, in case a device in the pipe section connected to the safety valve has a sudden increase in fluid demand. Such sudden increase in fluid demand can cause a short drop in pressure over the safety shutdown valve, falsely resulting in an automatic blockage of the fluid flow.

Protection valves activated by pressure differences is e.g. known from document DE 10 2010 024 987 A1, which discloses an arrangement according to the preamble of claim 1 and having a continuous-flow water heater with a regulation and protection valve. The regulation and protection valve comprises two interconnected valves on both sides of the actual heating block, that are actuated by control valve comprising a membrane loaded with a respective pressure before and after the heating block on both sides. In case of a pressure difference, the membrane is deformed and thus moves the two interconnected valves in order to regulate the through-flow or even block the fluid passage in case of a malfunction.

Document JP S60-220275 discloses a mixing valve with pressure regulation, wherein the through-flow of the two fluids to be mixed is regulated by a pressure difference on both sides of a piston separating the two fluids and being connected to two valve elements for regulating the flow-ratio between the two fluids.

In document WO 2007/085255 A1, a valve arrangement for a heat exchanger is disclosed, where the regulating valves of the two separate water circuits are interconnected to be actuated together under certain circumstances.

The problem addressed by the present invention is to provide an arrangement with a protection valve, which eliminates or at least reduces the disadvantages present in the state of the art based on pressure drops or pressure differences.

This problem is solved by an arrangement with a protection valve according to the main claim. Advantageous embodiments are the subject matter of the dependent claims.

According thereto, the invention relates to an arrangement with a protection valve to avoid severe leakage of a fluid in a pipe loop with an inlet and an outlet, comprising a first and a separate second fluid transit chamber each with a flow measuring means that provides a mechanical force as a function of the rate of fluid flow through the respective fluid transit chamber, wherein the two flow measuring means are force-coupled and configured for the force coupling to remain stationary when the rate of fluid flow through both transit chambers fulfil a predefined fluid flow ratio, further comprising a first valve to selectively block the fluid flow through the first fluid transit chamber, wherein the valve is linked to the force coupling to be moved from an open to a closed position in case the force coupling is actuated due to a deviation from said predefined fluid flow ratio.

The term "force coupling" designates a coupling between two components that is capable to transmit mechanical forces from one components to the other without requiring external energy (e.g. electrical energy). The force coupling may be designed as a purely mechanical coupling or as a hydraulic coupling. Other designs, e.g. magnetic, may also be conceivable. However, for a mechanism to be a force coupling in the sense of the present invention, it must not require any external energy supply whatsoever.

The invention is based on the finding that - other than the observing sudden pressure drops at a safety shutoff valve - leaks in a pipe loop may be reliably detected by comparing the inflow and the outflow rate of said otherwise closed pipe
loop, independent from the actual location of a leak, especially in relation to any other device provided in the pipe loop. In general, for a corresponding intact closed pipe loop it can be concluded that the outflow shall always match the inflow of fluid. Any deviation of these two flow rates, especially a reduction of the outflow in comparison to the inflow, gives a clear indication of a leak between the inlet and the outlet of the pipe loop. This is especially true for an incompressible fluid. The arrangement with a protection valve according to the invention is capable of detecting a deviation between the inflow and the outflow of a pipe loop and, in case of a deviation, suppressing any further flow of fluid into or out the pipe loop. The latter is depending on how the protection valve is connected to the pipe loop, i.e. whether the inflow or the outflow is routed through the first transit chambers of the protection valve. The required significance of the deviation of the predefined fluid flow ratio for it to be detected by the protection valve according to the invention and thus its response behavior is depending on the actual design and implementation of the protection valve. A skilled person can easily adjust the response behavior of a protection valve by altering the design parameters of the flow measuring means, especially in view of the relationship between fluid flow and mechanical force resulting therefrom.

The actual blockage of fluid flow through the first transit chamber and thus into or out of the pipe loop is achieved by the first valve. The first valve is moved from an open to a closed position in case of a deviation from said predefined fluid flow ratio through the two transit chambers of the protection valve. The first valve may - in direction of the flow through the first transit chamber - be arranged in front or behind said transit chamber. In both cases, fluid flow through the first transit chamber may be suppressed. Of course, in case of the first valve being arranged behind the first transit chamber, it is preferably ensured that no leak may occur between the first transit chamber and the first valve, which, however, may be easily achieved by e.g. forming the housing of the first transit chamber and the first valve from a single block resulting in a continuous inner wall for the fluid passage.

Advantageously, the arrangement with a protection valve according to the invention fulfils its purpose without any requirement for electrical power supply whatsoever. As a result, the installation and operation of the protection valve is quite simple and not dependent on the presence of a power supply or the regular exchange of portable power sources, such as batteries. At the same time, the protection valve is capable to react to even small deviations from the predetermined flow ration while at the same time not being susceptible to false alarms in case of sudden change in flow rates.

It is preferred that the first valve and the force coupling are configured to block the fluid flow through the first fluid transit chamber in case the fluid flow through the first fluid transit chamber is higher than the fluid flow through the second fluid transit chamber. In case the protection valve is connected to a pipe loop so that the inflow into the pipe loop is routed through the first fluid transit chamber, this configuration will stop any fluid from flowing into the pipe loop in case of a leak.

Of course, the arrangement with a protection valve according to the invention may also comprise a second valve to selectively block the fluid flow through the second fluid transit chamber, wherein the valve is linked to the force coupling to be moved from an open to a closed position in case the force coupling is actuated due to a deviation from said predefined fluid flow ratio. The second valve may be closed in parallel with the first valve, i.e. at the same deviation from said predefined fluid flow ratio, or anti-parallel to the first valve, i.e. the first valve closes at the occurrence of e.g. a negative deviation from the predefined fluid flow ratio while the second valve closes on a positive deviation from the predefined fluid flow ratio. The second valve may have the same characteristics as the first valve and even be comparably or identically constructed. For sake of clarity, in the following preferred embodiments of the first valve are explained only. However, these preferred embodiments may also be applied to a possible second valve.

Preferably, at least one of the flow measuring means comprises a drag element located in the flow path of the respective fluid transit chamber and movable in the direction of the flow path, whose drag force produced by fluid flow through said fluid transit chamber is a function of the rate of the fluid flow. At least in case the movement of the drag element is restricted by a linear guiding, a corresponding flow measuring means comprising a drag element may provide a mechanical force that is variable in its scalar size but not in its orientation.

Based on this, it is preferred that both flow measuring means comprise a drag element each, wherein the two drag elements are fixed to a common shaft element that establishes the force coupling. In other words, the two drag elements may be fixed to a common shaft, which form a mechanical coupling, so that under normal conditions (i.e. predefined fluid flow ratio is achieved) one drag element exerts a force on the common shaft that is matched by the force exerted by the other drag element in an opposite direction. Of course, any additional elements exerting forces on the common shaft may be taken into account in this equation.

In case of the flow measuring means in the first fluid transit chamber comprising a drag element, it is preferred that the first valve comprises a closing member and a seat, wherein the closing member blocks the fluid flow through a valve chamber when pushed against the seat, and wherein the closing member is rigidly connected to the drag element in the first fluid transit chamber, whereby any relative movement between the closing member and said drag element is prevented. Since any drag force occurring at the drag element in the first fluid transit chamber, which is not cancelled out by the force coupling, will lead to a movement of said drag element and subsequently of the closing member of the first valve that can be directed towards the seat of the first valve. The closing member might, for example, be fixed to a common shaft mechanically coupling drag elements in the fluid transit chambers also fixed thereto.

Said the closing member and said drag element may also be constructed as a single element and/or the seat of the first valve may be located within the first fluid transit chamber. In case of a single element acting as both drag element and closing member the rigid connection between the drag element and the closing member is inherent. Furthermore, the number of components for the protection valve is reduced resulting in lower costs and assembly effort.

It is preferred that the first valve is spring loaded to be pushed to an open position in case the force coupling is free of external forces induced by the flow measuring means and/or the first valve. In other words, once closed the first valve should again open in case there is no fluid flowing through the protection valve and the closing member of first valve is not pressed against its seat by a pressure difference between both sides of the first valve. With a corresponding spring, it is possible to reset the protection valve after an automatic shutoff to a state that allows fluid flow through the first fluid transit chamber again. For this, it is necessary to achieve a state complying with the requirements mentioned before. To facilitate this, the protection valve may comprise a by-pass channel to by-pass the first, preferably both fluid transit chambers and/or the first valve in order to free the force coupling from external forces induced by the flow measuring means and/or the first valve, i.e. to relief any static or dynamic pressure from the mentioned components in order to allow the spring to reset the valve to an open position. As mentioned before, in case the first valve is spring-loaded, the force exerted by the spring on the valve is transferred to the force coupling, which needs to be taken into account when designing the protection valve in view of the desired response behavior and the desired significance of the deviation of the predefined fluid flow ratio for it to be detected by the arrangement with a protection valve according to the invention.

Alternatively or in addition, mechanical reset means may also be provided that allow the valve to be opened against pressure exerted on the first valve and/or the flow measuring means. The mechanical reset means are thus configured to exert an additional force on the closing member of the first valve for it to open. The mechanical reset means may be configured to be hand-operated.

It is preferred that the protection valve protection valve is configured to allow a flow rate of at least 45 l/min (0,00075 m³/s) through at least one fluid transit chamber and/or configured to shut the first valve at a flow rate ratio deviation of at least 20%, preferably of at least 15%, more preferably of at least 10%. Furthermore the protection valve shall preferably be configured to withstand pressures of up to 10 bar and/or temperatures of about 80-100°C.

The protection valve may be made of non-corrosive material, e.g. brass, titanium, stainless steels, hydrocarbon polymers etc..

The fluid transit chambers may be designed as pipe sections, i.e. having the same cross section at the inlet and the outlet as well as in between those two.

The protection valve described above is used in an arrangement of a protection valve and a closed pipe loop, wherein fluid before entering the closed pipe loop at its inlet is routed through the first fluid transit chamber of the protection valve and the fluid when leaving the pipe loop at its outlet is routed through the second fluid transit chamber of the protection valve, wherein the predefined fluid flow ratio of the protection valve is preferably approx. 1:1. For detailed description of this arrangement and its operation, it is referred to the above explanations.

The invention will now be described in further detail in context of the enclosed drawings showing preferable embodiments of the invention. These are:
- Figure 1:: a schematic drawing of a first exemplary embodiment of the arrangement with a protection valve according to the invention; and
- Figure 2:: a schematic drawing of a first exemplary embodiment of the protection valve for the arrangement according to the invention.

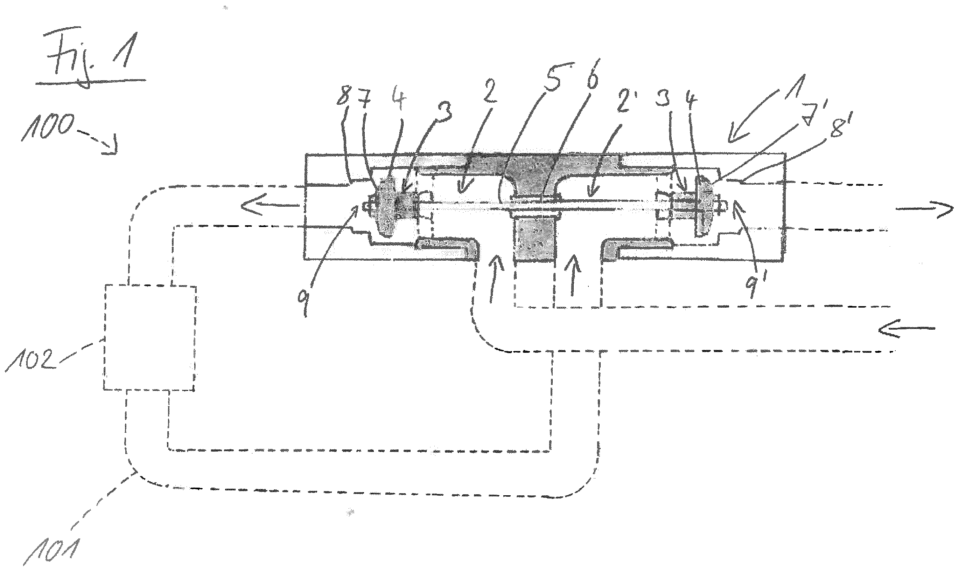

Figure 1 shows a schematic drawing of a first exemplary embodiment of the protection valve 1 and - in dotted lines - its integration in an arrangement 100 with a pipe loop 101. In this exemplary example, the protection valve 1 is configured for leak protection in pipe loops 101 connected to the pipe network of a district heating systems.

The protection valve 1 comprises a first and a separate second fluid transit chamber 2, 2', through which heated water may flow. In each of the fluid transit chambers 2, 2', there is a flow measuring means 3, 3' in form of a drag element 4, 4', which due to drag produces a mechanical force as a function of the fluid flow through the respective fluid transit chamber 2, 2'. The drag elements 4, 4' of both fluid transit chambers 2, 2' are fixed to the common shaft 5 that is movably mounted to allow sliding movements along it axis. The actual mounting 6 of the shaft 5 is arranged to prevent any direct fluid exchange between the two fluid transit chambers 2, 2'. Due to said mounting of the shaft 5, the drag elements 4, 4' are jointly movable in the direction of the shaft's 5 axis and thus in the general direction of the flow within the two fluid transit chambers 2, 2'. In context of the present invention, the shaft 5 constitutes a force coupling between the drag elements 4, 4' and thus the flow measuring means 3, 3'.

Both drag elements 4, 4', on one side each, are designed as closing elements 7, 7' that, together with a seat 8, 8' in each of the first and the second fluid transit chambers 2, 2', form a first and a second valve 9, 9'. If one of the closing elements 7, 7' is pushed against the respective seat 8, 8', fluid flow through the corresponding fluid transit chambers 2, 2' is blocked.

The operating principle of the protection valve 1 is now explained in connection with the arrangement 100 schematically indicated. In this arrangement 100, the pipe loop 101 is connected to the pipe network of a district heating systems. The inlet of the pipe loop 101 for high-pressurized hot water is routed through the first fluid transit chamber 2, while the outlet of the pipe loop 101 for return water is routed through the second fluid transit chamber 2. In the pipe loop 101, an interface unit 102 comprising a heat exchanger, a heat metering device and a flow control valve (not shown) is arranged.

Under normal condition - i.e. without a leak in the pipe loop 101 - the rate of fluid flow through each of the fluid transit chambers 2, 2' is virtually identical, i.e. the flow ratio between the two fluid transit chambers 2, 2' is approx. 1:1. As a result, the drag forces produced by the drag elements 4, 4' in each of the fluid transit chambers 2, 2' is - due to the connections as shown in figure 1 - also identical, keeping the shaft 5 as the force coupling between the drag elements 4, 4' in equilibrium.

However, in case of a leak in the pipe loop 101, the flow ratio momentarily deviates from said 1:1 ratio since the flow rate through the first fluid transit chamber 2 will be higher than through the second fluid transit chamber 2'. As a result, the drag force produced by the drag element 4 will prevail and move the shaft 5 together with the drag elements 4, 4' towards the seat 8 in the first transit chamber 2. Eventually, the closing elements 7 as part of the drag element 4 comes into contact with the seat 8. The first valve 9 is then closed and blocks any fluid flow through the first fluid transit chamber 2. Consequently, fluid inflow into the pipe loop 101 is stopped. Undesired leakage of high-pressurized hot water in the pipe loop 101, which might pose a risk of injury, is thus avoided.

The Protection valve 1 shown in figure 1 allows a flow rate of at least 45 l/min (0,00075 m³/s), while its components are configured to shut the first valve 9 at a flow rate deviation of 10% or more. In other words, if the flow rate though the first fluid transit chamber 2 is by 10% higher than the flow rate in the second fluid transit chamber 2', the first valve 9 will be closed as described. The protection valve 1 is capable of withstanding pressures of up to 10 bar and temperatures of about 80-100°C.

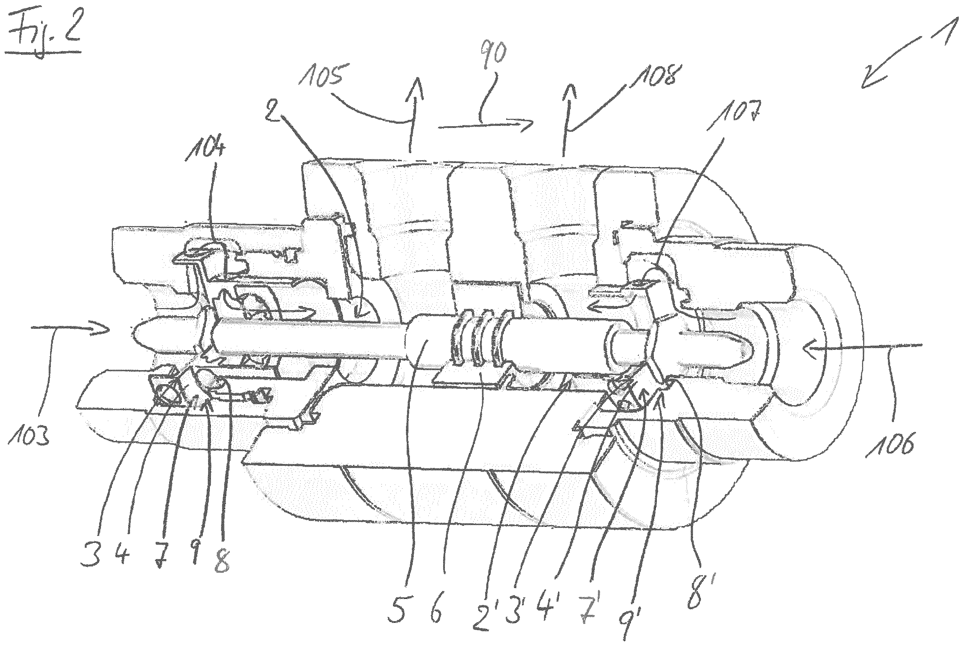

Figure 2 shows a schematic drawing of a second exemplary embodiment of the protection valve 1, which is similar to the protection valve 1 shown in figure 1. Therefore, in the following only some peculiarities of the valve shown in figure 2 are outline, while for the remains it is referred to the foregoing.

High pressurized water enters the protection valve 1 via the inlet at 103 and gets throttled and deflected multiple times to get passed the flow measuring means 3 in the first fluid transit chamber 2 (indicated at 104), before entering a pipe loop (not shown) at 105. The return from the pipe loop enters the protection valve 1 at 106. The returned water is again throttled and deflected multiple time to get passed the flow measuring means 3' before leaving the protection valve 1 via the outlet at 108.

The throttling at and the deflection required to get passed the flow measuring means 3, 3' is adapted to the required operating behavior of the protection valve 1. By designing the flow dynamics around the measuring means 3, 3', the force exerted on the common shaft 5 may be adjusted in order to achieve a closing characteristic of the protection valve, which on the one hand provide sufficient safety while on the other hand effectively precludes false tripping.

The closing elements 7, 7' and seats 8, 8' in each fluid transit chamber 2, 2' are arranged so that the first and the second valve 9, 9' simultaneously close on a certain flow differential between the two fluid transit chamber 2, 2'. In the example shown, both valves 9, 9' close in case of a leak in the pipe loop, since in this case the shaft 5 together with the drag elements 4, 4' connected thereto collectively move into the direction of the arrow 90 shown in figure 2, which pushes the closing elements 7, 7' against the respective seat 8, 8'. This way, backflow of fluid into the pipe loop can be prevented.

## Claims

1. Arrangement (100) of a protection valve (1) and a closed pipe loop (101) with an inlet and an outlet, wherein
- the protection valve (1) comprises a first and a separate second fluid transit chamber (2, 2'), and wherein
- fluid before entering the closed pipe loop (101) at its inlet is routed through the first fluid transit chamber (2) of the protection valve (1) and the fluid when leaving the pipe loop (101) at its outlet is routed through the second fluid transit (2') chamber of the protection valve, **characterised in that** each of the first and second fluid transit chambers (2, 2') comprises
a flow measuring means (3, 3') that provides a mechanical force as a function of the rate of fluid flow through the respective fluid transit chamber (2, 2'), wherein the two flow measuring means (3, 3') are force-coupled and configured for the force coupling to remain stationary when the rate of fluid flow through both transit chambers (2, 2') fulfil a predefined fluid flow ratio, further comprising a first valve (9) to selectively block the fluid flow through the first fluid transit chamber (2), wherein the first valve (9) is linked to the force coupling to be moved from an open to a closed position in case the force coupling is actuated by the flow measuring means due to a deviation from said predefined fluid flow ratio.

2. Arrangement according to claim 1, wherein the first valve (9) and the force coupling are configured to block the fluid flow through the first fluid transit chamber (2) in case the fluid flow through the first fluid transit chamber (2) is higher than the fluid flow through the second fluid transit chamber (2').

3. Arrangement according to claim 1 or 2, wherein the protection valve (1) also comprises a second valve (9') to selectively block the fluid flow through the second fluid transit chamber (2'), wherein the second valve (9') is linked to the force coupling to be moved from an open to a closed position in case the force coupling is actuated due to a deviation from said predefined fluid flow ratio.

4. Arrangement according to either one of the claims 1 to 3, wherein at least one of the flow measuring means (3, 3') comprises a drag element (4, 4') located in the flow path of the respective fluid transit chamber (2, 2') and movable in the direction of the flow path, whose drag force resulting from a fluid flow through said fluid transit chamber (2, 2') is a function of the rate of the fluid flow.

5. Arrangement according to claim 4, wherein both flow measuring means (3, 3') comprise a drag element (4, 4') each, wherein the two drag elements (4, 4') are fixed to a common shaft element (5) that establishes the force coupling.

6. Arrangement according to claim 4 or 5, wherein the first and/or the second valve (9) comprises a closing member (7) and a seat (8), wherein the closing member (7) blocks the fluid flow through the first fluid transit chamber (2) when pushed against the seat (8), and wherein the closing member (7) is rigidly connected to the drag element (4) in the first fluid transit chamber (2), whereby any relative movement between the closing member (7) and said drag element (4) is prevented.

7. Arrangement according to claim 6, wherein the closing member (7) and the drag element (4) are constructed as a single element and/or the seat (8) of the first valve (9) is located within the first fluid transit chamber (2).

8. Arrangement according to any of the preceding claims, wherein the first valve (9) is spring loaded to be pushed to an open position in case the force coupling is free of external forces induced by the flow measuring means (3, 3') and/or the first valve (9).

9. Arrangement according to any of the preceding claims, wherein the protection valve (1) comprises a by-pass channel to by-pass the first, preferably both fluid transit chambers (2, 2') and/or the first valve (9) in order to free the force coupling from external forces induced by the flow measuring means (3, 3') and/or the first valve (9).

10. Arrangement according to any of the preceding claims, wherein mechanical reset means are provided that allow the first valve (9) to be opened against pressure exerted on the valve (9) and/or the force coupling.

11. Arrangement according to any of the preceding claims, wherein the protection valve (1) is configured to allow a flow rate of at least 45 l/min (0,00075 m³/s) and/or configured to shut the first valve (9) at a flow rate deviation of at least 20%, preferably of at least 15%, more preferably of at least 10%.

12. Arrangement according to any of the preceding claims, wherein the protection valve (1) is configured to withstand pressures of up to 10 bar and/or temperatures of about 80-100°C.

13. Arrangement (100) according to any one of the preceding claims, wherein the predefined fluid flow ratio of the protection valve (1) is approx. 1:1.

## Patentansprüche

1. Anordnung (100) aus einem Schutzventil (1) und einer geschlossenen Rohrschleife (101) mit einem Einlass und einem Auslass, wobei
- das Schutzventil (1) eine erste und eine separate zweite Fluiddurchgangskammer (2, 2') umfasst und wobei
- Fluid vor dem Eintreten in die geschlossene Rohrschleife (101) an deren Einlass durch die erste Fluiddurchgangskammer (2) des Schutzventils (1) geleitet wird und das Fluid beim Verlassen der Rohrschleife (101) an deren Auslass durch die zweite Fluiddurchgangskammer (2') des Schutzventils geleitet wird, **dadurch gekennzeichnet, dass** sowohl die erste als auch die zweite Fluiddurchgangskammer (2, 2') Folgendes umfassen:
ein Durchflussmessmittel (3, 3'), das eine mechanische Kraft als eine Funktion der Rate des Fluiddurchflusses durch die entsprechende Fluiddurchgangskammer (2, 2') bereitstellt, wobei die zwei Durchflussmessmittel (3, 3') kraftgekoppelt sind und so ausgelegt sind, dass die Kraftkopplung stationär bleibt, wenn die Rate von Fluiddurchfluss durch beide Durchgangskammern (2, 2') ein vordefiniertes Fluiddurchflussverhältnis erfüllt, ferner umfassend ein erstes Ventil (9) zum gezielten Blockieren des Fluiddurchflusses durch die erste Fluiddurchgangskammer (2), wobei das erste Ventil (9) mit der Kraftkopplung verbunden ist, um aus einer offenen in eine geschlossene Position bewegt zu werden in dem Fall, dass die Kraftkopplung durch das Durchflussmessmittel aufgrund einer Abweichung von dem vordefinierten Fluiddurchflussverhältnis betätigt wird.

2. Anordnung nach Anspruch 1, wobei das erste Ventil (9) und die Kraftkopplung dazu ausgelegt sind, den Fluiddurchfluss durch die erste Fluiddurchgangskammer (2) zu blockieren in dem Fall, dass der Fluiddurchfluss durch die erste Fluiddurchgangskammer (2) höher als der Fluiddurchfluss durch die zweite Fluiddurchgangskammer (2') ist.

3. Anordnung nach Anspruch 1 oder 2, wobei das Schutzventil (1) auch ein zweites Ventil (9') zum gezielten Blockieren des Fluiddurchflusses durch die zweite Fluiddurchgangskammer (2') umfasst, wobei das zweite Ventil (9') mit der Kraftkopplung verbunden ist, um aus einer offenen in eine geschlossene Position bewegt zu werden in dem Fall, dass die Kraftkopplung durch das Durchflussmessmittel aufgrund einer Abweichung von dem vordefinierten Fluiddurchflussverhältnis betätigt wird.

4. Anordnung nach einem der Ansprüche 1 bis 3, wobei zumindest eines der Durchflussmessmittel (3, 3') ein Widerstandselement (4, 4') umfasst, befindlich im Strömungspfad der entsprechenden Fluiddurchgangskammer (2, 2') und in Richtung des Strömungspfads bewegbar, dessen Widerstandskraft, die aus einem Fluiddurchfluss durch die Fluiddurchgangskammer (2, 2') resultiert, eine Funktion der Rate des Fluiddurchflusses ist.

5. Anordnung nach Anspruch 4, wobei beide Durchflussmessmittel (3, 3') jeweils ein Widerstandselement (4, 4') umfassen, wobei die zwei Widerstandselemente (4, 4') an einem gemeinsamen Wellenelement (5) befestigt sind, das die Kraftkopplung herstellt.

6. Anordnung nach Anspruch 4 oder 5, wobei das erste und/oder das zweite Ventil (9) ein Schließglied (7) und einen Sitz (8) umfassen, wobei das Schließglied (7) die Fluidströmung durch die erste Fluiddurchgangskammer (2) blockiert, wenn es gegen den Sitz (8) gedrückt wird, und wobei das Schließglied (7) starr mit dem Widerstandselement (4) in der ersten Fluiddurchgangskammer (2) verbunden ist, wobei jede relative Bewegung zwischen dem Schließglied (7) und dem Widerstandselement (4) verhindert wird.

7. Anordnung nach Anspruch 6, wobei das Schließglied (7) und das Widerstandselement (4) als ein einzelnes Element konstruiert sind und/oder der Sitz (8) des ersten Ventils (9) innerhalb der ersten Fluiddurchgangskammer (2) befindlich ist.

8. Anordnung nach einem der vorhergehenden Ansprüche, wobei das erste Ventil (9) federbelastet ist, um in eine offene Position gedrückt zu werden in dem Fall, dass die Kraftkopplung frei von äußeren Kräften ist, die durch die Durchflussmessmittel (3, 3') und/oder das erste Ventil (9) induziert werden.

9. Anordnung nach einem der vorhergehenden Ansprüche, wobei das Schutzventil (1) einen Umgehungskanal zum Umgehen der ersten, vorzugsweise beider Fluiddurchgangskammern (2, 2') und/oder des ersten Ventils (9) umfasst, um die Kraftkopplung von äußeren Kräften zu befreien, die durch die Durchflussmessmittel (3, 3') und/oder das erste Ventil (9) induziert werden.

10. Anordnung nach einem der vorhergehenden Ansprüche, wobei mechanische Rücksetzmittel bereitgestellt sind, die dem ersten Ventil (9) ermöglichen, gegen Druck, der auf das Ventil (9) und/oder die Kraftkopplung gewirkt wird, geöffnet zu werden.

11. Anordnung nach einem der vorhergehenden Ansprüche, wobei das Schutzventil (1) dazu ausgelegt ist, eine Durchflussrate von mindestens 45 l/min (0,00075 m³/s) zu ermöglichen und/oder dazu ausgelegt ist, das erste Ventil (9) bei einer Durchflussratenabweichung von mindestens 20 %, vorzugsweise von mindestens 15 %, noch mehr vorzuziehen von mindestens 10 %, zu schließen.

12. Anordnung nach einem der vorhergehenden Ansprüche, wobei das Schutzventil (1) dazu ausgelegt ist, Drücken von bis zu 10 bar und/oder Temperaturen von etwa 80-100 °C zu widerstehen.

13. Anordnung (100) nach einem der vorhergehenden Ansprüche, wobei das vordefinierte Fluiddurchflussverhältnis des Schutzventils (1) etwa 1:1 ist.

## Revendications

1. Agencement (100) d'une soupape de protection (1) et d'une boucle de tuyau fermée (101) avec une entrée et une sortie,
la soupape de protection (1) comprenant une première et une seconde chambre de transit de fluide (2, 2') séparée, et
le fluide, avant d'entrer dans la boucle de tuyau fermée (101) au niveau de son entrée, étant acheminé à travers la première chambre de transit de fluide (2) de la soupape de protection (1) et le fluide, lorsqu'il quitte la boucle de tuyau (101) au niveau de sa sortie, étant acheminé à travers la seconde chambre de transit de fluide (2') de la soupape de protection, **caractérisé en ce que** chacune des première et seconde chambres de transit de fluide (2, 2') comprend
un moyen de mesure de débit (3, 3') qui fournit une force mécanique en fonction du débit de fluide à travers la chambre de transit de fluide (2, 2') respective, les deux moyens de mesure de débit (3, 3') étant accouplés par force et conçus pour que l'accouplement par force reste stationnaire lorsque le débit de fluide à travers les deux chambres de transit (2, 2') respecte un rapport de débit de fluide prédéfini, comprenant en outre une première soupape (9) pour bloquer sélectivement l'écoulement de fluide à travers la première chambre de transit de fluide (2), la première soupape (9) étant reliée à l'accouplement par force pour être déplacée d'une position ouverte à une position fermée dans le cas où l'accouplement par force est actionné par le moyen de mesure de débit en raison d'une déviation par rapport audit débit de fluide prédéfini.

2. Agencement selon la revendication 1, la première soupape (9) et l'accouplement par force étant conçus pour bloquer l'écoulement de fluide à travers la première chambre de transit de fluide (2) dans le cas où l'écoulement de fluide à travers la première chambre de transit de fluide (2) est supérieur à l'écoulement de fluide à travers la seconde chambre de transit de fluide (2').

3. Agencement selon la revendication 1 ou 2, la soupape de protection (1) comprenant également une seconde soupape (9') pour bloquer sélectivement l'écoulement de fluide à travers la seconde chambre de transit de fluide (2'), la seconde soupape (9') étant reliée à l'accouplement par force pour être déplacée d'une position ouverte à une position fermée dans le cas où l'accouplement par force est actionné en raison d'une déviation par rapport audit rapport de débit de fluide prédéfini.

4. Agencement selon l'une ou l'autre des revendications 1 à 3, au moins l'un des moyens de mesure de débit (3, 3') comprenant un élément de traînée (4, 4') situé dans le trajet d'écoulement de la chambre de transit de fluide (2, 2') respective et mobile dans la direction du trajet d'écoulement, dont la force de traînée résultant d'un écoulement de fluide à travers ladite chambre de transit de fluide (2, 2') est fonction du débit de l'écoulement de fluide.

5. Agencement selon la revendication 4, les deux moyens de mesure de débit (3, 3') comprenant chacun un élément de traînée (4, 4'), les deux éléments de traînée (4, 4') étant fixés à un élément d'arbre commun (5) qui établit l'accouplement par force.

6. Agencement selon la revendication 4 ou 5, la première et/ou la seconde soupape (9) comprenant un élément de fermeture (7) et un siège (8), l'élément de fermeture (7) bloquant l'écoulement de fluide à travers la première chambre de transit de fluide (2) lorsqu'il est poussé contre le siège (8), et l'élément de fermeture (7) étant relié de manière rigide à l'élément de traînée (4) dans la première chambre de transit de fluide (2), moyennant quoi tout mouvement relatif entre l'élément de fermeture (7) et ledit élément de traînée (4) est empêché.

7. Agencement selon la revendication 6, l'élément de fermeture (7) et l'élément d'entraînement (4) étant construits comme un seul élément et/ou le siège (8) de la première soupape (9) étant situé à l'intérieur de la première chambre de transit de fluide (2).

8. Agencement selon l'une quelconque des revendications précédentes, la première soupape (9) étant chargée par ressort pour être poussée vers une position ouverte dans le cas où l'accouplement par force est exempt de forces externes induites par le moyen de mesure de débit (3, 3') et/ou la première soupape (9).

9. Agencement selon l'une quelconque des revendications précédentes, la soupape de protection (1) comprenant un canal de dérivation pour contourner la première, de préférence les deux chambres de transit de fluide (2, 2') et/ou la première soupape (9) afin de libérer l'accouplement par force des forces externes induites par le moyen de mesure de débit (3, 3') et/ou la première soupape (9).

10. Agencement selon l'une quelconque des revendications précédentes, un moyen de réinitialisation mécanique étant fourni qui permet à la première soupape (9) d'être ouverte contre une pression exercée sur la soupape (9) et/ou l'accouplement par force.

11. Agencement selon l'une quelconque des revendications précédentes, la soupape de protection (1) étant conçue pour permettre un débit d'au moins 45 l/min (0,00075 m³/s) et/ou conçue pour fermer la première soupape (9) à une déviation de débit d'au moins 20 %, de préférence d'au moins 15 %, de préférence encore d'au moins 10 %.

12. Agencement selon l'une quelconque des revendications précédentes, la soupape de protection (1) étant conçue pour supporter des pressions allant jusqu'à 10 bars et/ou des températures d'environ 80 à 100 °C.

13. Agencement (100) selon l'une quelconque des revendications précédentes, le rapport de débit de fluide prédéfini de la soupape de protection (1) étant d'environ 1:1.
